(19) Europäisches Patentamt
European Patent Office
Office européen des brevets

(11) EP 2 201 672 B1

(12) **EUROPÄISCHE PATENTSCHRIFT**

(45) Veröffentlichungstag und Bekanntmachung des Hinweises auf die Patenterteilung:
**23.01.2013 Patentblatt 2013/04**

(21) Anmeldenummer: **08802674.5**

(22) Anmeldetag: **26.09.2008**

(51) Int Cl.:
***H02P 3/24*** *(2006.01)* ***H02P 6/24*** *(2006.01)*
***H02P 21/00*** *(2006.01)* ***B60L 7/10*** *(2006.01)*
***B60L 15/02*** *(2006.01)* ***B60L 15/20*** *(2006.01)*
***H02P 25/02*** *(2006.01)* ***B60L 11/18*** *(2006.01)*
***H02P 3/02*** *(2006.01)*

(86) Internationale Anmeldenummer:
**PCT/EP2008/008229**

(87) Internationale Veröffentlichungsnummer:
**WO 2009/043556 (09.04.2009 Gazette 2009/15)**

(54) **VERFAHREN UND STEUERUNGSSYSTEM ZUR STEUERUNG EINER ELEKTRISCHEN SYNCHRONMASCHINE**

METHOD AND CONTROL SYSTEM FOR CONTROLLING A SYNCHRONOUS ELECTRIC MACHINE

PROCÉDÉ ET SYSTÈME DE COMMANDE POUR COMMANDER UNE MACHINE SYNCHRONE ÉLECTRIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **27.09.2007 DE 102007046289**

(43) Veröffentlichungstag der Anmeldung:
**30.06.2010 Patentblatt 2010/26**

(73) Patentinhaber: **L-3 Communications Magnet-Motor GmbH**
**82319 Starnberg (DE)**

(72) Erfinder:
- **HÖHN, Harry**
**82386 Oberhausen (DE)**
- **LAY, Lars**
**82327 Tutzing (DE)**
- **BIEBACH, Jens**
**82327 Tutzing (DE)**

(74) Vertreter: **Klunker . Schmitt-Nilson . Hirsch**
**Patentanwälte**
**Destouchesstrasse 68**
**80796 München (DE)**

(56) Entgegenhaltungen:
**EP-A- 1 555 748** **JP-A- 6 253 404**
**JP-A- 8 009 680** **JP-A- 8 080 086**
**US-A- 6 124 645** **US-A1- 2004 178 754**

- **"Synchron-Vollpolmaschine ohne Dämpferwicklung. Steuerbedingungen ED - Schröder; Dirk" 1. Januar 1995 (1995-01-01), ELEKTRISCHE ANTRIEBE 2. REGELUNG VON ANTRIEBEN, SPRINGER, PAGE(S) 530 - 571 , XP009118119 ISBN: 978-3-540-57610-5 Seite 540; Abbildung 16.23**

EP 2 201 672 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren zur Steuerung einer elektrischen Synchronmaschine sowie ein Steuerungssystem zur Steuerung einer elektrischen Synchronmaschine mit einer Steuerungseinrichtung, welche mit einer elektrischen Einspeiseeinrichtung zur Bestromung eines elektrischen Statorsystems der Maschine verbindbar ist. Weiterhin betrifft die Erfindung ein Fahrzeug mit wenigstens einer elektrischen Synchronmaschine zum Antrieb des Fahrzeugs und mit einem solchen Steuerungssystem, sowie ein Computerprogrammprodukt, welches zur Ausführung eines solchen Verfahrens geeignet ist.

Eine Synchronmaschine und ein System zur Steuerung einer solchen Synchronmaschine wird beispielsweise in einem elektrischen Fahrzeug eingesetzt. Unter einem elektrisch angetriebenen Fahrzeug ist dabei ein Fortbewegungs- oder Transportmittel zu verstehen, bei dem das Antriebsmoment über das magnetische Feld eines oder mehrere Drehstromsynchronmotoren (drehende oder lineare Ausführung) bereitgestellt und mechanisch auf die Fläche übertragen wird, über der die Bewegung stattfindet. Dabei ist es üblich, dass die elektrische Maschine das Moment entweder direkt (Radnabenmotor ohne Getriebe, Linearmotor) oder über ein vorgeschaltetes Getriebe (Radnabenmotor mit Getriebe, Zentralmotor mit verschiedenen Getriebeformen zur Momentweiterleitung) abgibt.

Für Fortbewegungsmittel ist je nach Beschleunigungs- oder Verzögerungsbedarf (negative Beschleunigung) die Anforderung eines bestimmten positiven oder negativen Momentes charakteristisch. Soll das Fahrzeug beschleunigt werden, wird das positive Moment so gewählt, dass eine angestrebte Geschwindigkeit in gewünschter Zeit erreicht wird. Die Vorgabe des positiven Momentwertes erfolgt z.B. per Gaspedal. Ist eine Verzögerung gewünscht, wird der Befehl für ein negatives Moment gegeben. Dieser Befehl kann z.B. mit dem Bremspedal vorgegeben werden.

Erfolgt die Übertragung der Momente an mehreren Stellen zur Fläche, über der die Bewegung stattfindet, so sind die Einzelmomente so zu wählen, dass ein stabiler Zustand des Fahrzeuges unterstützt wird. Das heißt, es wird versucht, Gearmomente zu verhindern. Zur Verhinderung von Gearmomenten erfolgt im Normalfall die Momenteinleitung symmetrisch zur Fahrzeuglängsachse. Dies ist z.B. bei Fahrzeugen der Fall, bei denen Achsweise dem Betrag nach gleiche Radmomente in die gleiche Fahrrichtung wirken.

Damit die Drehstromsynchronmaschine ihr volles Moment entfalten kann, müssen Frequenz und Phasenlage des speisenden Stromes der Polfrequenz und Pollage des Rotors bzw. Läufers entsprechen. Für die Bereitstellung eines synchronen Drehstromsystems mit richtiger Phasenlage wird z.B. ein elektronischer Wechselrichter auf der Basis von Leistungshalbleitern verwendet. Bei der Drehstromsynchronmaschine existiert bei synchronem Betrieb unter linearen Systembedingungen eine direkte Proportionalität zwischen dem eingeprägten Strom und dem erreichten Moment. Diese Proportionalität wird genutzt, um mittels gleicher Stromvorgabe an Motoren einer Achse gleiche Momente zu realisieren. Zur präzisen Momentvorgabe ist ein schneller Stromregler erforderlich. Dieser Stromregler kann weiteren Regelungen, wie z. B. einer Drehzahlregelung unterlagert sein.

Der Bedarf nach Momentsymmetrie besteht nicht nur beim Beschleunigen des Fahrzeuges, sondern auch beim Bremsen. Beim Bremsen wird ein Moment entwickelt, welches der aktuellen Bewegungsrichtung von Fahrzeug und Maschine entgegenwirkt, wobei die kinetische Energie von Fahrzeug und Maschine in elektrische Energie gewandelt wird. Diese Verzögerung bewirkt, dass die Maschine die Geschwindigkeit Null erreicht. In diesem Augenblick muss das Moment genau so dosiert werden, dass es die äußeren Krafte des Fahrzeuges vollständig kompensiert.

Eine Drehzahlregelung ist vielfach nicht optimal. Der Drehzahlregelung ist typischerweise eine Stromregelung unterlagert, so dass alle Räder nach Bremspedalvorgabe ein konstantes Moment aufbauen. Somit können Räder, die sich auf losem Untergrund befinden, rutschen, während Räder auf festem Untergrund noch rollen. Eine Adaption der Bremskraft an den Untergrund ist schwer möglich. Ebenso ist es problematisch, die Verstärkungsparameter des Drehzahlreglers zu wählen, da diese z.B. von solchen Faktoren wie Masse des Fahrzeugs, die nach dem Beladungszustand variiert, Haftreibungsbeiwert, der vom aktuellen Untergrund sowie der Reifenwahl abhängig ist, Position der Räder im vorderen oder hinteren Fahrzeugbereich und Gefälle respektive Steigung der Fahrbahn abhängig sind. Befindet sich zwischen der Maschine und dem Momentangriffspunkt noch ein Getriebe mit charakteristischer Lose, dann besteht die Gefahr, dass die Zahnflanken durch die heftigen Lastwechsel des Getriebes beschädigt werden.

Der Stand der Technik offenbart :

US 6 124 645 A beschreibt ein Steuerungsverfahren für ein elektrisches Fahrzeug, bei dem das Ziel besteht, das Fahrzeug an einem Berg im Stillstand zu halten, wenn das Gaspedal nicht betätigt wird. Hierbei wird bei Detektion eines Stillstands des Fahrzeugs in einen Regelmechanismus umgeschaltet, um eine Momentenregelung durchzuführen, so dass das Fahrzeug im Stillstand gehalten wird.

EP 1 555 748 A hat zum Gegenstand, einen Winkelversatz zwischen einer magnetischen Pol-Position eines Synchronmotors und einer Referenzposition eines inkrementellen Encoders festzustellen. Hierzu wird die magnetische Pol-Position des Motors an einer stabilen Position mittels einer DC-Erregung festgehalten, um nachfolgend den Encoder entsprechend zu justieren. Es wird der Statorstrom bei Id und Iq = 0 eingestellt, wobei die Größe des Stroms Id über die Zeit verändert, insbesondere abgesenkt wird. Der dadurch erreichte Effekt ist, dass die Zeit, bis der Rotor des Motors zum Stillstand gelangt, verkürzt wird.

In Schröder, D. "Synchron-Vollpolmaschine ohne Dämpferwicklung, Steuerbedingungen", Elektrische Antriebe 2, Regelung von Antrieben, Springer, Seiten 530-571, 1. Januar 1995 ist ein Verfahren zur Regelung von Synchronmaschinen beschrieben.

In US 2004/0178754 A1 wird eine Vorrichtung und ein Verfahren zum Halten eines elektrischen oder hybrid elektrischen Fahrzeugs an einem Anstieg beschrieben. Die Vorrichtung umfasst eine Dreiphasen-Maschine, die das Fahrzeug antreibt. Die Maschine wird durch einen pulsweitenmodulierten Wechselrichter angetrieben, der mehrere Halbbrücken aufweist, die mit jeweiligen unterschiedlichen Maschinephasen verbunden werden. Die Betriebs-Strategie setzt bestimmte Schaltmodi ein, um den Leistungsverlust unter den Leistungsschaltern im Wechselrichter und in den Maschinenphasen zu minimieren und zu verteilen.

Der vorliegenden Erfindung liegt die Aufgabe zugrunde, ein Verfahren zur Steuerung einer elektrischen Synchronmaschine und ein entsprechendes Steuerungssystem anzugeben, das geeignet ist, ein angetriebenes Fahrzeug weitgehend ohne Pendelbewegungen im Stillstand zu halten.

Die Aufgabe wird gelöst durch ein Verfahren zur Steuerung einer elektrischen Synchronmaschine nach Anspruch 1. Weiterhin betrifft die Erfindung ein Fahrzeug mit wenigstens einer elektrischen Synchronmaschine zum Antrieb des Fahrzeugs und mit einem Steuerungssystem gemäß den Merkmalen des Anspruchs 8, sowie ein Computerprogrammprodukt gemäß Anspruch 9 welches Softwarecodeabschnitte aufweist, welche zur Ausführung eines solchen Steuerungsverfahrens geeignet sind, wenn sie in einem Steuerungssystem zur Steuerung einer elektrischen Synchronmaschine gespeichert sind. Das Computerprogrammprodukt kann auch durch eine verbindungs-programmierte Schaltung gemäß Anspruch 10 gleicher Funktionalität ersetzt werden.

Insbesondere betrifft die Erfindung ein Verfahren zur Steuerung einer elektrischen Synchronmaschine mit einem Stator und einem Läufer, mit folgenden Schritten: Die Maschine wird mit einem Verzögerungsmoment betrieben, so dass sich eine Läufergeschwindigkeit der Maschine reduziert, und die Läuferbewegung der Maschine wird überwacht. Bei Detektion einer Richtungsumkehr oder einer Geschwindigkeit des Läufers von näherungsweise Null wird unter Übergang in einen Festhaltemodus mindestens eine elektrische Einspeisegröße eines elektrischen Statorsystems der Maschine derart eingestellt, dass zu Beginn des Festhaltemodus ein wirksames inneres Moment der Maschine gebildet wird, das in Bezug auf das Verzögerungsmoment reduziert ist. Die elektrische Einspeisegröße wird solange derart eingestellt, bis sich unter Bewegung des Läufers und Einfluss eines äußeren, auf die Maschine wirkenden Moments ein stabiles Momentengleichgewicht zwischen dem äußeren Moment und dem inneren Moment der Maschine einstellt.

Demnach erhält man gemäß der Erfindung eine Stillstandssteuerung von synchronen elektrischen Maschinen in drehender oder linearer Ausführung, bei der nach erfolgter Verzögerung mit geregeltem Moment bzw. geregelter Kraft beim Erreichen der Geschwindigkeit Null in einen speziellen Festhaltemodus umgeschaltet wird, in dem sich ein stabiles Moment- bzw. Kräftegleichgewicht im Schnittpunkt zweier Momenten-Kraftkennlinien einstellt, so dass das Fahrzeug trotz äußerer Kraft im Stillstand verharrt.

Ziel ist es hierbei, dem Fahrzeug nach Umkehr der Bewegungsrichtung einen Widerstand entgegenzusetzen, der sich mit der Zunahme des zurückgelegten Weges vergrößert. Ohne Steuerungs- bzw. Regelungseingriffe stellt sich dann ein Zustand ein, in dem sich antreibende und bremsende Momente im Gleichgewicht befinden und das Fahrzeug im Stillstand verharrt.

Insbesondere wird im Festhaltemodus eine Phasenlage der elektrischen Einspeisegröße in Bezug auf das Statorsystem im wesentlichen konstant gehalten. In einer Ausführungsform wird die elektrische Einspeisegröße derart eingestellt, dass zu Beginn des Festhaltemodus ein wirksames inneres Moment der Maschine näherungsweise zu Null wird.

Hierbei können Phasenlage und Betrag der elektrischen Einspeisegröße durch eine während der Richtungsumkehr bzw. Geschwindigkeit Null gültige Läuferposition der Maschine und eine Verzögerungsmomentvorgabe definiert eingestellt werden.

Beispielsweise wird als elektrische Einspeisegröße ein Strommuster in den Stator der Maschine eingeprägt, insbesondere ein Muster von im wesentlichen konstanten Strangströmen. Das Strommuster bildet gemäß einer Ausführungsform einen Stromvektor in Raumzeigerdarstellung, der zu Beginn des Festhaltemodus derart eingeprägt wird, dass sich eine Phasenlage des Stromvektors von näherungsweise - 90° elektrisch bezogen auf die Bewegungsrichtung des Raumzeigers der induzierten Läuferspannung nach dem Stillstand einstellt und somit nachläuft (Spätzündung).

Weitere vorteilhafte Aus- und Weiterbildungen der Erfindung sind in den Unteransprüchen angegeben.

Die Erfindung wird im folgenden anhand der in der Zeichnung dargestellten Figuren näher erläutert. Es zeigen:

Fig. 1 eine schematische Darstellung eines Antriebssystems mit einer elektrischen Synchronmaschine in Form einer Drehfeldmaschine, welche von einem Steuerungssystem mit einem Umrichter angesteuert und gespeist wird,

Fig. 2 eine schematische Darstellung von elektrischen Größen in einem erfindungsgemäßen Feststellbetrieb, welche von der Drehfeldmaschine bzw. von dem Steuerungssystem nach Fig. 1 erzeugt werden, in Raumzeigerdarstellung,

Fig. 3 eine weitere schematische Darstellung von elektrischen Größen in einem erfindungsgemäßen Feststellbetrieb, welche von der Drehfeldmaschine bzw. von dem Steuerungssystem nach Fig. 1 erzeugt werden, in Raumzeigerdarstellung,

Fig. 4 eine schematische Darstellung von Istwerten von entsprechenden Stator-Strangströmen.

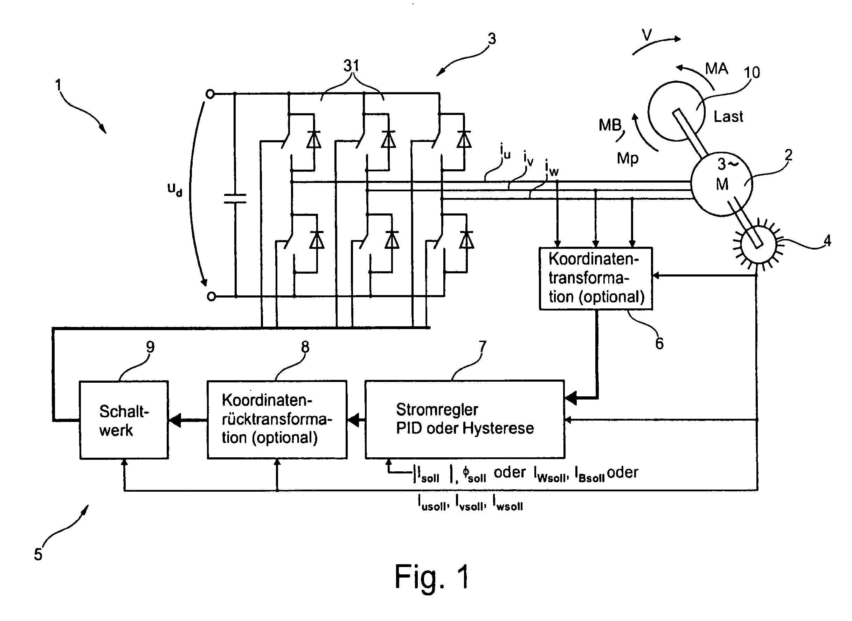

In Fig. 1 ist eine schematische Darstellung eines Antriebssystems mit einer elektrischen Synchronmaschine in Form einer Drehfeldmaschine 2 gezeigt, welche von einem Steuerungssystem 1 mit einem Umrichter 3 angesteuert und gespeist wird. Die folgenden Überlegungen im Hinblick auf die Steuerung der Drehfeldmaschine 2 gelten in analoger Weise auch für eine Steuerung einer Synchronmaschine in linearer Ausführung, bei welcher Ständer und Läufer entsprechend als linearer Ständer bzw. Läufer ausgebildet sind.

Der Umrichter 3 ist in bekannter Weise als Spannnungszwischenkreisumrichter mit der Zwischenkreisspannung Ud ausgebildet, wobei auch grundsätzlich andere Umrichterarten eingesetzt werden können. Der Umrichter 3 wird dabei von einem Schaltwerk 9 angesteuert, welches die Stromventile 31 des Umrichters 3 entsprechend der Steuerungsvorgabe ansteuert, d.h. entsprechend öffnet bzw. schließt. An dem Rotor der Maschine 2 wirkt eine Last 10, etwa über eine Achse eines Fahrzeugs.

Es ist bekannt, dass Drehfeldmaschinen sowohl in Rotor- als auch in Statorkoordinaten geregelt werden können. Die Regelung des Stromes in Statorkoordinaten hat den Vorteil, dass keine Koordinatentransformation durchgeführt werden muss. Die Strom-Istwerte werden wie gemessen an den Stromregler 7 übergeben. Da Soll- und Istwert jeweils dynamische Wechselgrößen sind, werden hohe Anforderungen an den Regler 7 gestellt. Die Verwendung eines linearen PI-Reglers ist wegen der Wechselgrößen nicht möglich. Es ist jedoch möglich, hochwertige Regelungen in Statorkoordinaten durch den Einsatz von nichtlinearen Hysteresereglern zu realisieren. Eine ggf. notwendige Koordinatentransformation und Koordinatenrücktransformation wird in einer entsprechenden Koordinatentransformations-Einrichtung 6 bzw. Koordinatenrücktransformations-Einrichtung 8 vorgenommen.

Werden die sinusförmigen Ständerströme in das Rotorkoordinatensystem transformiert, können sie als Gleichgrößen getrennt nach Wirk- und Blindanteil (kartesische Koordinaten) behandelt werden. Diese Koordinaten können auch in polare Koordinaten überführt werden, so dass der Statorstrom I mit dem Betrag seines Vektors und dem dazugehörenden Phasenwinkel $\varphi$ beschrieben wird. Mit den ad-äquaten Gleichgrößen als Sollwertwert (Iw, mit w für Wirkanteil, und Ib, mit b für Blindanteil, oder $|I|$ und $\varphi$) kann im Stromregler 7 eine lineare Regelung mit P-, I - und ggf. auch D-Anteil verwirklicht werden.

Die Nutzung der speziellen Eigenschaften der Synchronmaschine ermöglicht die Realisierung einer Stillstands-/Festhaltefunktion, die ohne Positions- oder Drehzahlregler auskommt. Die Synchronmaschine entwickelt dann das maximale Moment, wenn das magnetische Feld der Erregung und der elektrische Strom einen Winkel von 90° bilden. Die induzierte Spannung $U_{EMK}$ und der Phasenstrom haben dann untereinander einen Phasenwinkel von 0° elektrisch (motorisch) oder 180° elektrisch (generatorisch).

Um Synchronität zwischen dem Erregerfeld und dem Strom in der Statorwicklung herzustellen, wird vorliegend ein Lagegeber 4 benutzt, mit dessen Hilfe der speisende Umrichter 3 auf die sich bewegende Maschine 2 synchronisiert werden kann. Dieser Sensor sollte die Eigenschaft eines Absolutlagegebers besitzen. Ein Resolversystem erfüllt diese Anforderungen. Häufig wird der Resolver so angeordnet, dass er am Ort der Spannungsamplitude von Phase U das Winkelsignal Null liefert.

Wird die erste Ableitung des Positionssignals nach der Zeit gebildet, ergibt sich die Geschwindigkeit v, mit der sich der Rotor der Maschine 2 dreht. Für die Erkennung des Stillstandes kann der Vorzeichenwechsel der Geschwindigkeit v genutzt werden. Eine dynamisch hochwertigere Erkennung des Stillstands ist möglich, wenn der Richtungswechsel zwischen Vorwärts- und Rückwärtszählen des Resolvers ausgewertet wird. Resolverauswerteschaltungen stellen hierfür zum Teil eine Drehrichtungsinformation unter Verwendung eines speziellen Ausgabekanals zur Verfügung.

Umsetzung in polaren Rotorkoordinaten:

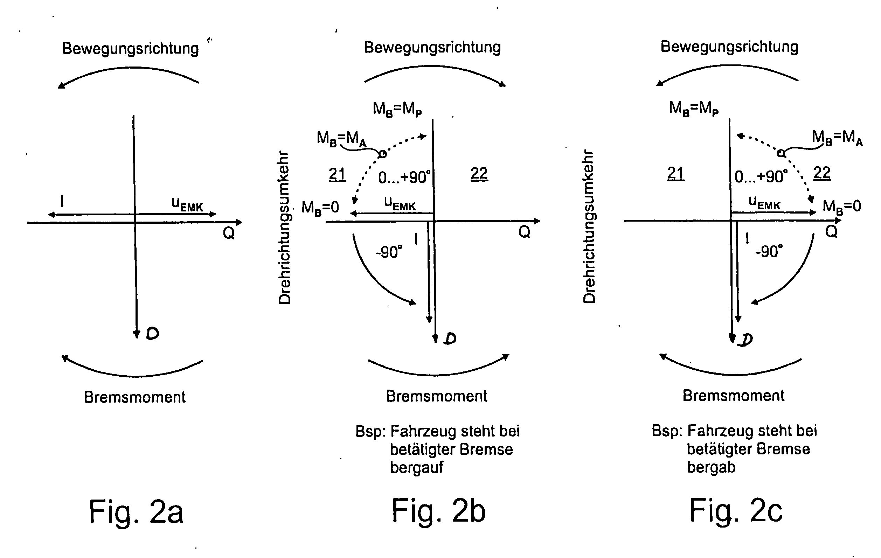

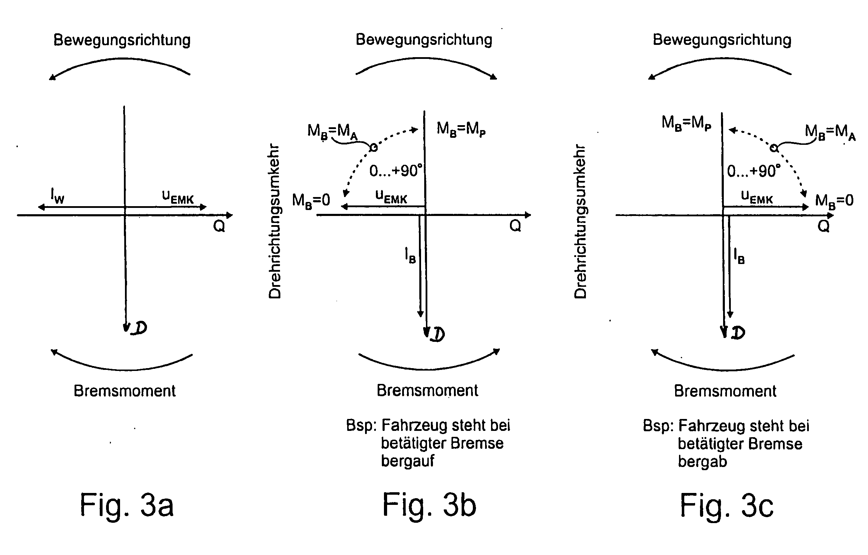

Die Figuren 2 und 3 zeigen ein System mit induzierter Spannung und Ständerstrom in Rotorkoordinatendarstellung. Da sich das System mit dem Rotor bewegt, sind die beiden elektrischen Größen fix. Es wird zunächst angenommen, dass sich der Rotor in positiver Drehrichtung bewegt und ein Bremsmoment $M_B$ (inneres Moment der Maschine) dieser Bewegungsrichtung entgegenwirkt, so dass die Maschine als Generator arbeitet.

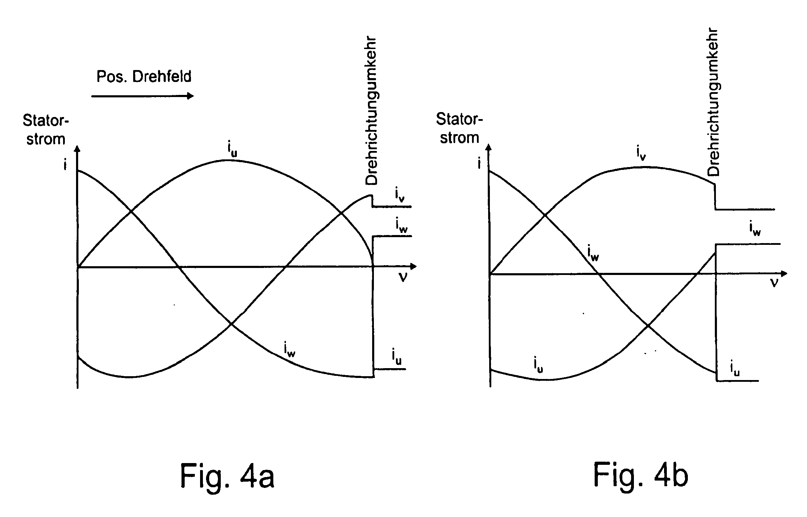

Als elektrische Einspeisegröße wird in dem vorliegenden Ausführungsbeispiel ein Strommuster mit Ständerströmen $i_u$, $i_v$, $i_w$ in die drei im wesentlichen symmetrischen Phasen u, v, w in den Stator der Maschine 2 eingeprägt (vgl. Fig. 1 im Zusammenhang mit Fig. 4), welche zusammen einen Ständer-Gesamtstrom I in bekannter Raumzeigerdarstellung mit Amplitude und Phasenlage ergeben, wie in Fig. 2 und 3 dargestellt.

Insbesondere bildet das Strommuster einen Stromvektor I in Raumzeigerdarstellung im sogenannten rotorfesten DQ-Koordinatensystem, der zu Beginn des Festhaltemodus derart eingeprägt wird, dass sich eine Phasenlage des Stromvektors I von näherungsweise -90° elektrisch bezogen auf die Bewegungsrichtung des Raumzeigers der induzierten Läuferspannung $U_{EMK}$ nach dem Stillstand einstellt und somit nachläuft (Spätzündung).

Der Phasenwinkel gibt die aktuelle Differenz zwischen der Position, die der Resolver liefert und die die aktuelle Position des Läufers charakterisiert, sowie dem Stator-Stromvektor I an. Da der Strom I zusammen mit der induzierten Spannung $U_{EMK}$ die Leistung der Maschine definiert, wird der Winkel häufig auf die induzierte Spannung $U_{EMK}$ bezogen. Wird der Resolver bei positiver Drehrichtung phasengleich zur induzierten Spannung $U_{EMK}$ positioniert, erfolgt bei Umkehr der Drehrichtung eine Phasenverschiebung um 180°.

Es sei zunächst angenommen, das Fahrzeug befindet sich in einem Bremsvorgang und die Bewegungsrichtung ist mathematisch positiv, d.h. entgegen dem Uhrzeigersinn (Fig. 2a). Da sich der Stromvektor I in direkter Opposition (180° Phasenversatz) zur induzierten Spannung $U_{EMK}$ befindet, entwickelt die Maschine das bei diesem Strombetrag maximal mögliche Moment $M_P$. Mit dem Betätigen des Bremspedals kann der Fahrer den Betrag des Stromvektors und damit die Intensität der Verzögerung bestimmen. Es wird angenommen, dass sich das Fahrzeug unmittelbar vor dem Stillstand befindet. Im Rotorkoordinatensystem verändert der Stromvektor seine Position nicht. Erfordert der Arbeitspunkt einen Betrieb bei Feldschwächung, wird dem Wirkstrom eine Blindstromkomponente überlagert, die der induzierten Spannung vorauseilt (Frühzündung). Der aus vektorieller Überlagerung von Wirk- und Blindstrom resultierende Strom verbleibt in seiner Position gegenüber der induzierten Spannung, solange dieser Grad der Feldschwächung beibehalten wird.

Geht die Geschwindigkeit durch Null, d.h. wird das Vorzeichen geändert, ändert sich auch die Richtung des $U_{EMK}$-Vektors (Fig. 2b), und es werden folgende Aktionen durchgeführt:

Bei Detektion einer Richtungsumkehr oder einer Geschwindigkeit v des Läufers von näherungsweise Null wird unter Übergang in einen Festhaltemodus der Stromvektor I des elektrischen Statorsystems der Maschine derart eingestellt, dass zu Beginn des Festhaltemodus ein wirksames inneres Moment $M_B$ der Maschine gebildet wird, das in Bezug auf das Verzögerungsmoment $M_P$ reduziert ist. Der Stromvektor I wird solange derart eingestellt, bis sich unter Bewegung des Läufers und Einfluss eines äußeren, auf die Maschine wirkenden Moments $M_A$ ein stabiles Momentengleichgewicht zwischen dem äußeren Moment $M_A$ und dem inneren Moment $M_B$ der Maschine einstellt.

Insbesondere wird im vorliegenden Fall der Stromvektor I in mathematisch positiver Richtung, d.h. gegen den Uhrzeigersinn, um 90° elektrisch gedreht und damit eine Phasenlage von -90° elektrisch bezogen auf die neue Bewegungsrichtung der induzierten Spannung eingestellt. Hierzu wird der Betrag des Stromvektors konstant gehalten und der Phasenwinkel entsprechend geändert. Der Betrag des Stromvektors I wird durch die Intensität der Betätigung des Bremspedals bestimmt. Das bei einer bestimmten Stellung des Bremspedals maximal wirksame Moment ist $M_P$. Die Phasenlage zwischen den Vektoren hat zur Folge, dass das Moment mit der Umschaltung sofort zu Null geht. Sind alle äußeren Momente in diesem Augenblick Null, wird das Fahrzeug stehen bleiben.

Die neue Position des Stromvektors I wird eingefroren, d.h. der Umrichter 3 wird von der Steuerungseinrichtung 5 (Fig. 1) so angesteuert, dass der Stromvektor I bezogen auf den Stator an der gleichen Position beharrt. Zu diesem Zweck wird der aktuelle Resolverwinkel abgespeichert. Im festgebremsten Zustand werden alle Berechnungen auf der Basis des abgespeicherten Resolverwinkels und Berücksichtigung einer 90°-Phasendrehung ausgeführt. Im Rotorkoordinatensystem hat das zur Folge, dass sich bei drehendem Rotor der Stromvektor I gegenüber dem fixen Spannungsvektor $U_{EMK}$ bewegt. Bewegt sich nun der Spannungsvektor $U_{EMK}$ immer mehr in Richtung Opposition zum Stromvektor I, nimmt das bremsende Moment $M_B$ der Maschine zu. Das kann zum Beispiel der Fall sein, wenn das Fahrzeug einen Hang hinauffuhr und am Hang abgebremst wurde. Das Fahrzeug hat eine dem Massenträgheitsmoment proportionale Energie und es wirkt die Hangabtriebskraft am Fahrzeug. Nachdem die kinetische Energie beim Bremsen in andere Energien gewandelt wurde, würde das Fahrzeug bei weiter bestehender Hangabtriebskraft und ohne bremsendes Moment nach dem Erreichen des Stillstandes rückwärts rollen. Der maximale Wert des Momentes ergäbe sich wieder für den Fall, dass Stromvektor **I** und Spannungsvektor $U_{EMK}$ auf einer Geraden liegen.

Im Festhaltemodus kann der Spannungsvektor $U_{EMK}$ einen Bereich von 0° elektrisch bzw. 180° elektrisch (M=0) bis 90° elektrisch ($M=M_P$) überstreichen, ohne dass der Stromvektor I in Ständerkoordinaten seine Position ändert. Gilt für alle auf das Fahrzeug einwirkenden äußeren Momente $M_A$: $0 <= M_A <= M_P$, so ergibt sich ein Gleichgewichtszustand $M_A = M_B$, bei dem das Fahrzeug zur Ruhe kommt. Man kann dieses Verhalten mit einer belasteten Federwaage vergleichen, bei welcher der zu wiegende Körper, solange sein Gewicht den Messbereich nicht überschreitet, nach einem bestimmten Federspannweg den Gleichgewichtszustand mit der Federkraft der Waage erreicht hat. Da sich der Bremsbereich zwischen dem Moment Null und einem Momentwert, der sich an der Stellung des Bremspedals orientiert, erstreckt, hängt die Stillstandsposition des Rotors von der Intensität der Betätigung des Bremspedals ab. Ist das Bremsmoment nicht groß genug, wird der Rotor den Festbremsbereich in der neuen Bewegungsrichtung verlassen. Ab dem Verlassen dieses Bereiches wird der Phasenwinkel des Ständerstromes in Rotorkoordinaten wieder konstant gehalten, so dass sich eine für den aktuellen Strombetrag maximale Bremswirkung ergibt.

Wird der Betrag des Stromvektors I soweit vergrößert, dass das resultierende Bremsmoment das antreibende Moment übersteigt, kommt die Maschine erneut zum Stillstand.

Allgemein ergibt sich somit aus dem oben beschriebenen Ausführungsbeispiel folgende allgemeine erfindungsgemäße Steuerung der Synchronmaschine:

Die Amplitude des Stromvektors I ist proportional zu einem aktuell angeforderten Verzögerungsmoment (Bremsmoment) $M_B$, wobei der Ständerstrom unter Annahme eines Läuferkoordinatensystems D, Q, bei dem unter Annahme einer positiven Bewegungsrichtung des Läufers der Raumzeiger der induzierten Läuferspannung $U_{EMK}$ auf der realen Achse Q in positiver Richtung orientiert ist, zu Beginn des Festhaltemodus derart eingeprägt wird, dass sich eine Phasenlage des Stromvektors I von näherungsweise -90° elektrisch zum Raumzeiger der induzierten Läuferspannung $U_{EMK}$ einstellt.

Entsprechend wird der Stromvektor I unter Annahme eines Läuferkoordinatensystems D, Q, bei dem unter Annahme einer negativen Bewegungsrichtung des Läufers der Raumzeiger der induzierten Läuferspannung $U_{EMK}$ auf der realen Achse Q in negativer Richtung orientiert ist, zu Beginn des Festhaltemodus derart eingeprägt, dass sich eine Phasenlage des Stromvektors I von näherungsweise -90° elektrisch bezogen auf die Bewegungsrichtung des Raumzeigers der induzierten Läuferspannung $U_{EMK}$ nach dem Stillstand einstellt.

Der Stromvektor I wird im Festhaltemodus in Ständerkoordinaten über einen ersten Bewegungswinkel-Bereich 21 des Spannungsvektors $U_{EMK}$ von 0° bis 90° elektrisch bezogen auf dessen Bewegungsrichtung nach dem Stillstand mit im wesentlichen konstanter Phasenlage bezogen auf das Koordinatensystem eingeprägt. Bei einer erneuten Detektion einer Richtungsumkehr oder einer Geschwindigkeit v des Läufers von näherungsweise Null, so dass die ursprüngliche Bewegungsrichtung des Läufers wieder eingenommen wird, wird der bereits wirksam eingeprägte Stromvektor I in Ständerkoordinaten über einen zweiten Bewegungswinkel-Bereich 22 des Spannungsvektors $U_{EMK}$ von 0° bis 90° elektrisch bezogen auf die aktualisierte Bewegungsrichtung nach dem Stillstand mit im wesentlichen konstanter Phasenlage gegenüber dem Koordinatensystem beibehalten.

Die im Festhaltemodus vorgegebene Einprägung des Stromvektors I wird beendet, wenn der elektrische Bewegungswinkel des Läufers den ersten oder den zweiten Bewegungswinkel-Bereich 21, 22 unter Einfluss eines äußeren Moments $M_A$ überschreitet, welches größer ist als das innere Moment $M_B$ der Maschine in den nicht aneinander grenzenden Randzonen des ersten bzw. zweiten Bewegungswinkel-Bereichs 21, 22, in einer Richtung, in der sich weder der erste (21) noch der zweite Bewegungswinkel-Bereich 22 befindet. Nach Überschreiten des ersten bzw. zweiten Bewegungswinkel-Bereichs 21, 22 werden die induzierte Läuferspannung $U_{EMK}$ und der Stromvektor I so zueinander eingestellt, dass bei weiterer Läuferbewegung der Maschine ein generatorischer Betrieb mit konstantem Moment gemäß einer aktuellen Anforderung erfolgt, wie er vor dem Übergang in den Festhaltemodus stattgefunden hat.

Dreht sich die Richtung des von außen am Fahrzeug angreifenden Momentes um, so dass der Spannungsvektor $U_{EMK}$ erneut auf eine Position mit 90° Phasenverschiebung zum Stromvektor I bewegt wird (Null-Moment), wird der erste Festbremsbereich verlassen (Fig. 2c). Mit dem Detektieren der aktuellen Drehrichtungsumkehr wird erneut die Festbremsaktion aktiviert, wobei sich die Strom- und Spannungsvektoren I und $U_{EMK}$ so einstellen, wie in Fig. 2c dargestellt. Damit ist unmittelbar nach dem Drehrichtungsumkehr das bremsende Moment Null und das Fahrzeug bewegt sich durch langsames Weiterdrehen bis zu einem Punkt, an dem das beschleunigende und das bremsende Moment im Gleichgewicht sind. Solange das äußere Moment $M_A$ das derzeit maximale Bremsmoment Mp nicht überschreitet, wie aus den Fig. 2b und 2c ersichtlich ist, kann zwischen beiden Bremsquadranten 21 und 22 gewechselt werden, ohne dass der Stromvektor I seine Richtung in Ständerkoordinaten ändert. Damit werden an den Stromregler 7 keine hohen dynamischen Anforderungen gestellt. Bezogen auf den Spannungsvektor $U_{EMK}$ und die aktuelle Drehrichtung eilt der Strom I unmittelbar zur Drehrichtungsumkehr immer um 90° nach. Bewegt sich der Rotor, kann der Strom konstant bleiben.

Wird das äußere Moment größer als das per Bremspedal vorgegebene Moment, wird der Festhaltebereich in die Richtung verlassen, in die das äußere Moment wirkt. Beim Verlassen des Festhaltebereichs stehen Stromvektor I und Spannungsvektor $U_{EMK}$ wieder in Opposition zueinander und werden ab Verlassen des Festbremsbereichs in dieser Position zueinander geführt. Hierzu wird ab Überschreiten der Bereichsgrenze die Rotorposition wieder permanent aktualisiert.

Wie die vorangegangenen Darstellungen zeigen, verbleibt das Fahrzeug über 180° der elektrischen Periode im Bremszustand. Geht man davon aus, das sich die Richtung des äußeren wirksamen Momentes nicht permanent ändert und das Bremsmoment groß genug vorgegeben wird, muss nach dem Augenblick der Drehrichtungsumkehr mit maximal einer Bewegung über 90°elektrisch gerechnet werden, bis das Fahrzeug zur Ruhe kommt. Unter Berücksichtigung der Anzahl der Polpaare P, die die elektrische Maschine hat, und des ggf. nachgeschalteten Getriebes mit der Untersetzung N muss mit einer Bewegung über einen mechanischen Winkel von maximal

$$\vartheta_{mech} = 90°/(P \cdot N)$$

gerechnet werden. Da drehmomentstarke Antriebsmaschinen bevorzugt mit Polpaarzahlen P größer 13 ausgeführt werden, ist die Strecke, die bis zum Stillstand der Maschine zurückgelegt wird, vernachlässigbar.

Stillstandssteuerung in kartesischen Koordinaten:

Vielfach wird die Stromposition nicht über Betrag und Winkel des Stromes, sondern über dessen Wirk- und Blindanteil definiert. Wie beim Arbeiten mit polaren Koordinaten wird beim Erkennen der Drehrichtungsumkehr die Resolverposition eingefroren. Die notwendige Drehung des Stromwinkels bezüglich der abgespeicherten Winkelposition wird nun nicht durch Aufschaltung eines Winkeloffsets, sondern durch vorzeichenrichtigen Tausch der Sollwerte für Wirk- und Blindstrom erreicht. Das bedeutet, dass der per Bremspedal vorgegebene Momentwert als Sollwert des Blindstromes Verwendung findet.

Es wird angenommen, dass sich ein Fahrzeug in positiver Richtung bewegt, so dass sich Ströme und induzierte Spannung wie in Fig. 3a dargestellt verhalten. Das Fahrzeug fährt bergauf. Mit eingeleitetem Bremsvorgang vermindert sich seine Geschwindigkeit, so dass die Geschwindigkeit Null erreicht wird. Anschließend kehrt sich durch die Hangabtriebskraft die Bewegungsrichtung um. Mit dem Vorzeichenwechsel der Geschwindigkeit wird das Festbremsen gestartet (Fig. 3b) und das Fahrzeug bewegt sich in einen Gleichgewichtszustand, der zwischen wirksamem Bremsmoment und einwirkendem Hangabtriebsmoment besteht. Wird dieser Gleichgewichtszustand nicht gefunden, da das Bremspedal nicht intensiv genug betätigt wird, bewegt sich das Fahrzeug mit der im Fig. 3a dargestellten Bewegungsrichtung weiter. Ab dem Überschreiten des Festbremsbereichs wird auf das aktuelle Resolversignal gewechselt und anstelle des Blindstromes wird der Wirkstrom aktiviert (Fig. 3b). Ändert sich die Drehrichtung erneut, geht das System in einen Zustand gemäß Fig. 3c über. Das Verhalten ist bei der Nutzung von polaren und kartesischen Koordinaten identisch; es wird lediglich ein anderer Steueransatz verwendet.

Stillstandssteuerung in Statorkoordinaten:

Erfolgt die Regelung der Synchronmaschine in Statorkoordinaten, muss der Regler mit den Wechselgrößen des Ständerstromes operieren. Deshalb wird als Vorgabewert auch eine Wechselgröße verwendet. Wird mit Drehrichtungsumkehr das Festbremsen aktiviert, wird ebenfalls ein Strommuster aktiviert, das im Aktivierungsaugenblick das wirksame Moment auf den Wert Null reduziert. Dieses Muster wird, solange sich der Läufer im Festbremsbereich bewegt, konstant gehalten.

Die Abbildungen der Fig. 4 zeigen die Stromverläufe einer synchronen Drehfeldmaschine, die aus jeweils unterschiedlicher Bewegungsrichtung abgebremst wird und an der gleichen mechanischen Position ins Festbremsen übergeht. Da der Übergang ins Festbremsen an der gleichen Stelle stattfindet, ergibt sich nachfolgend auch das gleiche Muster konstanter Ströme. Die in den Abbildungen der Fig. 4a, b gezeigten Muster würden sich auch bei der Anwendung des Rotorkoordinatensystems ergeben.

Zusammenfassend wird im Festhaltemodus ein spezielles Muster konstanter Ströme in die Spulen der Maschine eingeprägt, wobei dieses Muster ausschließlich durch die während der Geschwindigkeit Null gültige Rotorposition und einer aktuell wirksamen Maximalbremskraftvorgabe, wie sie mit einem Bremspedal erfolgen kann, definiert ist, so dass weder eine überlagerte Rotorpositions- noch überlagerte Rotorgeschwindigkeitsregelung erforderlich sind. Hierbei erstreckt sich der Festhaltemodus über einen Bereich von ±90° elektrisch ab dem Winkel, der beim Erreichen der Geschwindigkeit Null aktuell ist.

Die Regelung der Statorströme kann in polaren oder kartesischen Rotorkoordinaten oder in Ständerkoordinaten erfolgen. Wenn die Stromregelung in polaren Rotorkoordinaten erfolgt, wird der Sollwert des Stromvektors I definiert, indem der Phasenwinkel auf -90° elektrisch bezogen auf die Bewegungsrichtung des Vektors der induzierten Spannung gesetzt wird, während die Stellung des Bremspedals den Betrag des Vektors vorgibt. Wenn die Stromregelung in kartesischen Koordinaten erfolgt, wird der Stromsollwert während des Festbremsens definiert, indem der Wirkstromwert auf Null und der Blindstromwert auf einen der Stellung des Bremspedals proportionalen Wert gesetzt wird.

Wenn die Stromregelung in Rotorkoordinaten erfolgt, werden beim Eintreten des Festbremsens die drei Phasenstromsollwerte um +90° elektrisch (Bremsen aus positiver Drehrichtung) oder um -90° elektrisch (Bremsen aus negativer Drehrichtung) verschoben, so dass sich wieder ein Winkel von -90° elektrisch bezogen auf die aktuelle Bewegungsrichtung der induzierten Spannung ergibt.

Nach Umkehr des äußeren Momentes kann ein erneuter Nulldurchgang der Geschwindigkeit stattfinden, so dass die ursprüngliche Bewegungsrichtung wieder eingenommen wird und mit dem Nulldurchgang in den zweiten Festbremsquadranten gewechselt wird, ohne dass der bereits im ersten Festbremsquadranten wirksame Stromvektor seine Richtung wechseln würde, wobei die Lage des Stromvektors wiederum definiert werden kann, wie oben angegeben.

Die Festbremsquadranten werden verlassen, wenn die äußere Kraft die innerhalb der Festbremsquadranten maximal wirksame Bremskraft überschreitet, wobei unmittelbar beim Überschreiten der Bereichsgrenzen der Vektor der induzierten Spannung $U_{EMK}$ der Maschine und des Bremsstromes I in direkter Opposition zueinander stehen und der Resolverwinkel wieder permanent aktualisiert wird, so dass im weiteren der für einen konventionellen Bremsvorgang charakteristische generatorische Betrieb bei konstantem Moment bzw. konstanter Kraft stattfindet.

## Patentansprüche

**1.** Verfahren zur Steuerung einer elektrischen Synchronmaschine (2) mit einem Stator und einem Läufen, zum Antrieb eines Fahrzeugs mit folgenden Schritten:

- Betreiben der Synchronmaschine (2) mit einem Verzögerungsmoment ($M_p$), so dass sich eine Läufergeschwindigkeit der Maschine reduziert,
- Überwachung der Läuferbewegung der Synchronmaschine,
- bei Detektion einer Richtungsumkehr oder einer Geschwindigkeit (v) des Läufers von näherungsweise Null wird unter Übergang in einen Festhaltemodus mindestens ein Strommuster (I; $i_u$, $i_v$, $i_w$) von Strangströmen in den Stator der Synchronmaschine (2) eingeprägt, **dadurch gekennzeichnet,**
**dass** im Festhaltemodus eine Phasenlage des Strommusters (I; $i_u$, $i_v$, $i_w$) in Bezug auf das Koordinatensystem des Stators konstant gehalten wird und Phasenlage und Betrag des Strommusters (I; $i_u$, $i_v$, $i_w$) durch eine während der Richtungsumkehr bzw. Geschwindigkeit Null gültige Läuferposition der Synchronmaschine (2) und eine Verzögerungsmomentvorgabe eingestellt werden und das Strommuster einen Stromvektor (I) in Raumzeigerdarstellung eines Läuferkoordinätensystems (D, Q) bildet, der zu Beginn des Festhaltemodus derart eingeprägt wird, dass sich eine Phasenlage des Stromvektors (I) von -90° elektrisch bezogen auf die Bewegungsrichtung des Raumzeigers der induzierten Läuferspannung (UEMK) nach dem Stillstand einstellt und somit ein wirksames Bremsmoment ($M_B$) der Synchronmaschine (2) näherungsweise zu Null wird,
- das Strommuster (I; $i_u$, $i_v$, $i_w$) wird beibehalten, solange sich unter Bewegung des Läufers und Einfluss eines äußeren, auf die Synchronmaschine (2) wirkenden Moments ($M_A$) ein stabiles Momentengleichgewicht zwischen dem äußeren Moment ($M_A$) and dem Bremsmoment ($M_B$) der Maschine einstellt.

**2.** Verfahren nach Anspruch 1, bei dem ein Strommuster (I; $i_u$, $i_v$, $i_w$) von konstanten Strangströmen ($i_u$, $i_v$, $i_w$) eingespeist wird.

**3.** Verfahren nach einem der Ansprüche 1 oder 2, bei dem das Strommuster einen Stromvektor (I) in Raumzeigerdarstellung bildet, dessen Amplitude proportional zu einem aktuell angeforderten Verzögerungsmoment ($M_B$) ist, und der unter Annahme eines Läuferkoordinatensystems (D, Q), bei dem unter Annahme einer positiven Bewegungsrichtung des Läufers der Raumzeiger der induzierten Läuferspannung ($U_{EMK}$) auf der realen Achse (Q) in positiver Richtung orientiert ist, zu Beginn des Festhaltemodus derart eingeprägt wird, dass sich eine Phasenlage des Stromvektors (I) von -90° elektrisch bezogen auf die Bewegungsrichtung des Raumzeigers der induzierten Läuferspannung ($U_{EMK}$) einstellt.

**4.** Verfahren nach einem der Ansprüche 1 bis 3, bei dem das Strommuster einen Stromvektor (I) in Raumzeigerdarstellung bildet, dessen Amplitude proportional zu einem aktuell angeforderten Verzögerungsmoment ($M_B$) ist, und der unter Annahme eines Läuferkoordinatensystems (D, Q), bei dem unter Annahme einer negativen Bewegungsrichtung des Läufers der Raumzeiger der induzierten Läuferspannung ($U_{EMK}$) auf der realen Achse (Q) in negativer Richtung orientiert ist, zu Beginn des Festhaltemodus derart eingeprägt wird, dass sich eine Phasenlage des Stromvektors (I) von -90° elektrisch bezogen auf die Bewegungsrichtung des Raumzeigers der induzierten Läuferspannung ($U_{EMK}$) nach dem Stillstand einstellt.

**5.** Verfahren nach einem der Ansprüche 1 bis 4, bei dem das Strommuster (I; $i_u$, $i_v$, $i_w$) im Festhaltemodus über einen ersten Bewegungswinkel-Bereich (21) des Läufers von 0 bis 90° elektrisch bezogen auf dessen Bewegungsrichtung nach dem Stillstand mit konstanter Phasenlage bezogen auf das Koordinatensystem des Stators eingeprägt wird.

**6.** Verfahren nach Anspruch 5, bei dem bei einer erneuten Detektion einer Richtungsumkehr oder einer Geschwindigkeit (v) des Läufers von näherungsweise Null, so dass die ursprüngliche Bewegungsrichtung des Läufers wieder eingenommen wird, das bereits wirksam eingeprägte Strommuster (I; $i_u$, $i_v$, $i_w$) über einen zweiten Bewegungswinkel-Bereich (22) des Läufers von 0 bis 90° bezogen auf die aktualisierte Bewegungsrichtung nach dem Stillstand mit konstanter Phasenlage gegenüber dem Koordinatensystem des Stators beibehalten wird.

**7.** Verfahren nach Anspruch 5 oder 6, bei dem

- die im Festhaltemodus vorgegebene Einprägung des Strommusters (I; $i_u$, $i_v$, $i_w$) beendet wird, wenn der elektrische Bewegungswinkel des Läufers den ersten oder den zweiten Bewegungswinkel-Bereich (21, 22) unter Einfluss eines äußeren Moments ($M_A$), welches größer ist als das Bremsmoment ($_{MB}$) der Synchronmaschine (2) den nicht aneinander grenzenden Randzonen des ersten bzw. zweiten Bewegungswinkel-Bereichs (21, 22), in einer Richtung, in der sich weder der erste (21) noch der zweite Bewegungswinkel-Bereich (22) befindet, überschreitet,
- wobei nach Überschreiten des ersten bzw. zweiten Bewegungswinkel-Bereichs (21, 22) die induzierte Läuferspannung ($U_{EMK}$) und das Strommuster (I; $i_u$, $i_v$, $i_w$) so zueinander eingestellt werden, dass bei weiterer Läuferbewegung der Synchronmaschine (2) ein generatorischer Betrieb mit konstantem Moment gemäß einer aktuellen Anforderung erfolgt, wie er vor dem Übergang in den Festhaltemodus stattgefunden hat.

**8.** Fahrzeug mit wenigstens einer elektrischen Synchronmaschine (2) zum Antrieb des Fahrzeugs, und mit einem Steuerungssystem (1), das angepasst ist, die Synchronmaschine (2) nach einem Verfahren gemäß einem der Ansprüche 1-7 zu betreiben.

**9.** Computerprogrammprodukt, welches Softwarecodeabschnitte aufweist, die in einem Steuerungssystem (1) zur Steuerung einer elektrischen Synchronmaschine (2) gespeichert sind, wobei die Software code abschnitte derart angepasst sind, dass das Steuerungssystem ein Verfahren nach einem der Ansprüche 1 bis 7 ausfür. führt.

**10.** Verbindungsprogrammierte Schattung, wetche angepasst ist ein Verfahren nach einem der Ansprüche 1 bis 7 aus zutaten, wobei die verbindungsprogrammierte Schaltung in einem Steuerungssystem (1) zur Steuerung einer elektrischen Synchronmaschine (2) implementiert ist.

## Claims

**1.** A method of controlling an electric synchronous machine (2) having a stator and a moving part, for powering a vehicle, said method comprising the following steps:

- operating the synchronous machine (2) with a deceleration moment ($M_p$) so that a speed of the moving part of the machine is reducing,
- monitoring the movement of the moving part of the synchronous machine (2),
- upon detection of a direction reversal or a speed (v) of the moving part of approximately zero, a transition to a holding mode is effected, impressing at least one current pattern (I; $i_u$, $i_v$, $i_w$) of string currents in the stator of the synchronous machine (2), **characterized in that**, in the holding mode, a phase position of the current pattern (I; $i_u$, $i_v$, $i_w$) with respect to the coordinate system of the stator is held constant, and phase position and amount of the current pattern (I; $i_u$, $i_v$, $i_w$) are adjusted by a moving part position of the synchronous machine (2) that is valid during direction reversal or speed zero, respectively, and by a deceleration moment setting, and the current pattern constitutes a current vector (I) in a space vector representation of a moving part coordinate system (D, Q), which at the beginning of the holding mode is impressed such that a phase position of the current vector (I) of -90° electrical in relation to the direction of movement of the space vector of the induced moving part voltage (UEMK) is obtained after standstill and thus an effective braking moment ($M_B$) of the synchronous machine (2) becomes approximately zero;
- the current pattern (I; $i_u$, $i_v$, $i_w$) is maintained until, with movement of the moving part and influence of an external moment ($M_A$) acting on the synchronous machine (2), a stable equilibrium of moments between the external moment ($M_A$) and the braking moment ($M_B$) of the machine is established.

**2.** A method according to claim 1, wherein a current pattern (I; $i_u$, $i_v$, $i_w$) of constant string currents ($i_u$, $i_v$, $i_w$) is supplied.

**3.** A method according to any one of claims 1 or 2, wherein the current pattern forms a current vector (I) in space vector representation, the amplitude of which is proportional to a currently demanded deceleration moment ($M_B$) and which, assuming a moving part coordinate system (D, Q), in which on the assumption of a positive direction of moment of the moving part, the space vector of the induced moving part voltage ($U_{EMK}$) is oriented in positive direction on the real axis (Q), is impressed at the beginning of the holding mode in such a manner that a phase position of the current vector (I) of -90° electrical in relation to the direction of movement of the space vector of the induced moving part voltage ($U_{EMK}$) is reached.

**4.** A method according to any one of claims 1 to 3, wherein the current pattern forms a current vector (I) in space vector representation, the amplitude of which is proportional to a currently demanded deceleration moment ($M_B$) and which, assuming a moving part coordinate system (D, Q), in which on the assumption of a negative direction of moment of the moving part, the space vector of the induced moving part voltage ($U_{EMK}$) is oriented in negative direction on the real axis (Q), is impressed at the beginning of the holding mode in such a manner that a phase position of the current vector (I) of -90° electrical in relation to the direction of movement of the space vector of the induced moving part voltage ($U_{EMK}$) is reached after standstill.

**5.** A method according to any one of claims 1 to 4,

wherein the current pattern (I; $i_u$, $i_v$, $i_w$) in the holding mode is impressed over a first range (21) of an angle of movement of the moving part of from 0 to 90° electrical in relation to the direction of movement thereof after standstill, having a constant phase position with respect to the stator coordinate system.

**6.** A method according to claim 5, wherein, upon renewed detection of a direction reversal or a speed (v) of the moving part of approximately zero, so that the original direction of movement of the moving part is resumed, the already effectively impressed current pattern (I; $i_u$, $i_v$, $i_w$) is maintained over a second range (22) of an angle of movement of the moving part of from 0 to 90° in relation to the updated direction of movement after standstill with a constant phase position with respect to the stator coordinate system.

**7.** A method according to claim 5 or 6,

- wherein the impression of the current pattern (I; $i_u$, $i_v$, $i_w$) set in the holding mode is terminated when the electric angle of movement of the moving part exceeds the first or second range (21, 22) of the angle of movement under the influence of an external moment ($M_A$) that is greater than said braking moment ($M_B$) of the synchronous machine (2) in the not mutually adjacent marginal zones of the first and second range (21, 22) of the angle of movement, respectively, in a direction in which neither the first (21) nor the second range (22) of the angle of movement is located,
- wherein, after exceeding the first and second range (21, 22) of the angle of movement, respectively, the induced moving part voltage ($U_{EMK}$) and the current pattern (I; $i_u$, $i_v$, $i_w$) are adjusted relative to each other such that, with continued moving part movement of the synchronous machine (2), an operation in the generator mode with constant moment according to a presently existing demand takes place as it took place before the transition to the holding mode.

**8.** A vehicle comprising at least one electric synchronous machine (2) for powering the vehicle and comprising a control system (1) adapted to operate the synchronous machine (2) in accordance with a method according to anyone of claims 1 to 7.

**9.** A computer program product comprising software code sections stored in a control system (1) for controlling an electric synchronous machine (2), wherein the software code sections are adapted such that the control system performs a method according to any one of claims 1 to 7.

**10.** A connection-programmed circuit that is adapted for performing a method according to any one of claims 1 to 7, said connection-programmed circuit being implemented in a control system (1) for controlling an electric synchronous machine (2).

## Revendications

**1.** Procédé servant à commander une machine synchrone (2) électrique dotée d'un stator et d'un rotor, servant à entraîner un véhicule, comportant les étapes suivantes pour :

- faire fonctionner la machine synchrone (2) avec un couple de décélération ($M_p$) de manière à réduire une vitesse du rotor de la machine,
- surveiller le déplacement du rotor de la machine synchrone (2),
- dans lequel lors de la détection d'un changement de direction ou d'une vitesse (v) du rotor quasiment nulle, au moins un type de courant (i ; $i_u$, $i_v$, $i_w$) est appliqué dans le stator de la machine synchrone (2) par des courants de phase lors du passage à un mode d'arrêt, **caractérisé en ce qu'**une position de phase du type de courant (i ; $i_u$, $i_v$, $i_w$) est maintenue de manière constante par rapport au système de coordonnées du stator dans le mode d'arrêt, en ce que la position de phase et l'intensité du type de courant (i ; $i_u$, $i_v$, $i_w$) sont réglées par une position de rotor valable au cours du changement de direction ou d'une vitesse nulle et par une spécification du couple de décélération, et en ce que le type de courant constitue un vecteur courant (1) sur la représentation de l'indice spatial d'un système de coordonnées de rotor (D, Q), lequel vecteur de courant est appliqué au début du mode d'arrêt de manière à régler une position de phase du vecteur de courant (1) de -90° de manière électrique par rapport à la direction de déplacement de l'indice spatial de la tension du rotor induite (UEMK) après l'arrêt et ainsi à mettre quasiment à zéro un couple de freinage ($M_B$) actif de la machine synchrone (2),
- en ce que le type de courant (i ; $i_u$, $i_v$, $i_w$) est conservé le temps de procéder à un équilibrage stable entre le couple extérieur ($M_A$) et le couple de freinage ($M_B$) de la machine en déplaçant le rotor et en influençant un couple extérieur ($M_A$) agissant sur la machine synchrone (2).

**2.** Procédé selon la revendication 1, dans lequel un type de courant (i ; $i_u$, $i_v$, $i_w$) est injecté par des courants de phase ($i_u$, $i_v$, $i_w$) constants.

**3.** Procédé selon l'une quelconque des revendications 1 ou 2, dans lequel le type de courant forme un vecteur de courant (1) sur une représentation de l'indice spatial, dont l'amplitude est proportionnelle par rapport à un couple de décélération ($M_p$) actuel exigé et qui, en supposant un système de coordonnées de rotor (D, Q), dans lequel en supposant une direction de déplacement positive du rotor, l'indice spatial de la tension de rotor induite ($U_{EMK}$) est orienté dans la direction positive sur l'axe réel (Q), est appliqué au début du mode d'arrêt de manière à régler une position de phase du vecteur de courant (1) de -90° de manière électrique par rapport à la direction de déplacement de l'indice spatial de la tension de rotor induite ($U_{EMK}$).

**4.** Procédé selon l'une quelconque des revendications 1 à 3, dans lequel le type de courant forme un vecteur de courant (1) sur une représentation de l'indice spatial, dont l'amplitude est proportionnelle par rapport à un couple de décélération ($M_p$) actuel exigé et qui, en supposant un système de coordonnées de rotor (D, Q), dans lequel en supposant une direction de déplacement négative du rotor, l'indice spatial de la tension de rotor ($U_{EMK}$) induite est orienté dans la direction négative sur l'axe réel (Q), est appliqué au début du mode d'arrêt de manière à régler une position de phase du vecteur de courant (1) de -90° de manière électrique par rapport à la direction de déplacement de l'indice spatial de la tension de rotor induite ($U_{EMK}$) après l'arrêt.

**5.** Procédé selon l'une quelconque des revendications 1 à 4, dans lequel le type de courant (i ; $i_u$, $i_v$, $i_w$) est appliqué dans le mode d'arrêt par une première zone de déplacement angulaire (21) du rotor allant de 0 à 90° de manière électrique par rapport à la direction de déplacement de ce dernier après l'arrêt avec une position de phase constante par rapport au système de coordonnées du stator.

**6.** Procédé selon la revendication 5, dans lequel lors d'une nouvelle détection d'un changement de direction ou d'une vitesse (v) du rotor quasiment nulle de telle sorte que la direction de déplacement initiale du rotor est reprise, le type de courant (i ; $i_u$, $i_v$, $i_w$) déjà appliqué de manière active est maintenu par une deuxième zone de déplacement angulaire (22) du rotor allant de 0 à 90° par rapport à la direction de déplacement mise à jour après l'arrêt avec une position de phase constante par rapport au système de coordonnées du stator.

**7.** Procédé selon la revendication 5 ou 6, dans lequel

- l'application du type de courant (i ; $i_u$, $i_v$, $i_w$) prédéfinie dans le mode d'arrêt est stoppée lorsque l'angle de déplacement électrique du rotor dépasse la première ou la deuxième zone de déplacement angulaire (21, 22) en influençant un couple extérieur ($M_A$), plus grand que le couple de freinage ($M_B$) de la machine synchrone (2), dans les zones de bord adjacentes les unes aux autres de la première ou de la deuxième zone de déplacement angulaire (21, 22), dans une direction dans laquelle ni la première (21) ni la deuxième (22) zone de déplacement angulaire ne se trouvent,
- dans lequel après le dépassement de la première ou de la deuxième zone de déplacement angulaire (21, 22), la tension de rotor ($U_{EMK}$) induite et le type de courant (i ; $i_u$, $i_v$, $i_w$) sont réglés l'un par rapport à l'autre de telle manière que lors de la poursuite du déplacement du rotor de la machine synchrone (2) a lieu un fonctionnement génératif avec un couple constant en conformité avec une exigence actuelle, comme c'était le cas avant le passage au mode d'arrêt.

**8.** Véhicule équipé d'au moins une machine synchrone (2) électrique servant à entraîner le véhicule et équipé d'un système de commande (1) adapté pour fonctionner selon un procédé selon l'une quelconque des revendications 1 à 7.

**9.** Produit de programme informatique présentant des segments de code de logiciel mémorisés dans un système de commande (1) servant à commander une machine synchrone (2) électrique, dans lequel lesdits segments de code de logiciel sont adaptés de telle manière que le système de commande exécute un procédé selon l'une quelconque des revendications 1 à 7.

**10.** Commutation programmée par liaison adaptée pour exécuter un procédé selon l'une quelconque des revendications 1 à 7, dans laquelle la commutation programmée par liaison est implémentée dans un système de commande (1) servant à commander une machine synchrone (2) électrique.

1
2
3~
M
4
Last
10
MA
V
MB
Mp
6
Koordinaten-
transforma-
tion (optional)
3
31
iu
iv
iw
ud
7
Stromregler
PID oder Hysterese
Isoll I, φsoll oder IWsoll, IBsoll oder
Iusoll, Ivsoll, Iwsoll
8
Koordinaten-
rücktransforma-
tion (optional)
9
Schalt-
werk
5


Fig. 1

Bewegungsrichtung
Bremsmoment
U_EMK
I
D
Q
Fig. 2a
Bewegungsrichtung
Bremsmoment
Drehrichtungsumkehr
M_B=M_P
M_B=M_A
M_B=0
21
22
0...+90°
U_EMK
-90°
I
D
Q
Bsp: Fahrzeug steht bei betätigter Bremse bergauf
Fig. 2b
Bewegungsrichtung
Bremsmoment
Drehrichtungsumkehr
M_B=M_P
M_B=M_A
M_B=0
21
22
0...+90°
U_EMK
-90°
I
D
Q
Bsp: Fahrzeug steht bei betätigter Bremse bergab
Fig. 2c

Bewegungsrichtung
$M_B=M_A$
$M_B=0$
Q
$M_B=M_P$
0...+90°
$U_{EMK}$
$I_B$
D
Bremsmoment
Bsp: Fahrzeug steht bei betätigter Bremse bergab
Drehrichtungsumkehr
Bewegungsrichtung
$M_B=M_P$
Q
0...+90°
$U_{EMK}$
$I_B$
$M_B=M_A$
$M_B=0$
D
Bremsmoment
Bsp: Fahrzeug steht bei betätigter Bremse bergauf
Drehrichtungsumkehr
Bewegungsrichtung
$U_{EMK}$
Q
$I_W$
D
Bremsmoment

Fig. 3c

Fig. 3b

Fig. 3a

Stator-
strom
i
Pos. Drehfeld
Drehrichtungumkehr
v
$i_u$
$i_v$
$i_w$
Stator-
strom
i
Drehrichtungumkehr
v
$i_u$
$i_v$
$i_w$

Fig. 4a

Fig. 4b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6124645 A
- EP 1555748 A
- US 20040178754 A1


### In der Beschreibung aufgeführte Nicht-Patentliteratur


- Synchron-Vollpolmaschine ohne Dämpferwicklung, Steuerbedingungen. **SCHRÖDER, D.** Elektrische Antriebe 2. Springer, 01. Januar 1995, 530-571